Europäisches Patentamt

European Patent Office

Office européen des brevets

(11) Numéro de publication: **0 268 327**

**A1**

## DEMANDE DE BREVET EUROPEEN

(21) Numéro de dépôt: 87202163.9

(51) Int. Cl.⁴: **B23D 21/14**

(22) Date de dépôt: 06.11.87

(30) Priorité: 10.11.86 IT 8563186

(43) Date de publication de la demande:
**25.05.88 Bulletin 88/21**

(84) Etats contractants désignés:
**AT BE CH DE ES FR GB GR IT LI LU NL SE**

(71) Demandeur: **EGIDIO SINICO S.P.A.**
**Via A. Pacinotti, 34**
**I-36040 Brendola Vicenza(IT)**

(72) Inventeur: **Sinico, Egidio**
**Via Salita Castelli IV Martiri, 105**
**Brendola Vicenza(IT)**

(74) Mandataire: **Bettello, Luigi, Dott. Ing.**
**Via Col d'Echele, 25**
**I-36100 Vicenza(IT)**

(54) **Dispositif pour le sectionnement d'un tube métallique par expansion d'un outil à secteurs, destiné à une machine automatique à operations multiples.**

(57) L'invention prévoit que sous l'action de l'extrémité tronconique (7) d'une tige (8) qui avance suivant l'axe du tube à sectionner, les secteurs expansibles (6) d'un outil s'écartent pour provoquer la coupe du tube (2), en agissant en opposition avec une bague (3) qui entoure ledit tube. On obtient ainsi une opération de coupe plus rapide et permettant de ce fait une plus grande productivité de la machine à opérations multiples du type à tête tournante.

**FIG. 3**

EP 0 268 327 A1

La présente invention a pour but de réaliser un dispositif grâce auquel il est possible de procéder de manière automatique au sectionnement d'un tube métallique à l'aide d'un outil à secteurs expansibles qui est introduit à l'intérieur du tube à couper sur une profondeur égale à la longueur des segments de tubes à obtenir, le tout dans le cadre d'une machine automatique à tambour tournant pour opérations multiples destinées à être effectuées sur chaque segment de tube.

On connaît depuis longtemps des machines automatiques qui effectuent une série d'opérations sur des segments de tubes découpés à partir d'un tube de longueur indéfinie, l'opération de coupe du tube étant effectuée au premier poste de travail après que le tube brut ait été déplacé vers l'avant d'une longueur déterminée et avant que chaque segment obtenu ne soit soumis aux opérations subséquentes.

L'opération de coupe est généralement effectuée à l'aide d'une scie circulaire qui se déplace transversalement à l'axe du tube, ce qui implique normalement un temps considérable, presque toujours supérieur à celui nécessaire pour la mise en oeuvre des autres opérations sur chaque segment de tube coupé par la machine.

La vitesse de coupe à l'aide d'une scie circulaire ne peut être améliorée au-delà d'une certaine limite et ce aussi bien dans le cas de tubes de forte épaisseur par suite de la nécessité d'éviter des surchauffes et par suite du temps nécessaire à l'enlèvement du matériau, que dans le cas des tubes à épaisseur réduite afin d'éviter des déformations qui endommageraient irrémédiablement le tube travaillé.

Au contraire et grâce à l'adoption du dispositif suivant l'invention, le sectionnement du tube est effectué dans un laps de temps très réduit et ne comporte aucune déformation du segment de tube découpé, si bien que dans la machine automatique à opérations multiples, les temps de travail peuvent être réduits de manière sensible, avec des avantages considérables sur l'ensemble des coûts d'usinage et sur la quantité de pièces finies produites par ladite machine.

La caractéristique essentielle qui permet l'opération de coupe à l'aide d'un outil à secteurs expansibles introduit dans le tube à travailler réside dans le fait qu'une bague de maintien, disposée autour du tube, est amenée au niveau de la zone de coupe de façon à ce que cette coupe survienne à la suite de la pression exercée par les secteurs coupants qui s'écartent à l'intérieur dudit tube sous l'action de poussée de l'extrémité tronconique du piston qui agit sur les secteurs précités.

L'invention va être ci-après décrite de manière plus détaillée avec l'aide des planches de dessin annexées dans lesquelles :

La fig. 1 (planche I) est une vue en élévation de la tête à opérations multiples destinée à être montée dans la machine qui comprend un poste de sectionnement du tube.

La fig. 2 (planche II) est une coupe axiale de ce poste de sectionnement, représenté avec son vérin de commande.

La fig. 3 (planche III) montre, toujours en coupe axiale mais à plus grande échelle, l'extrémité de ce même poste de sectionnement.

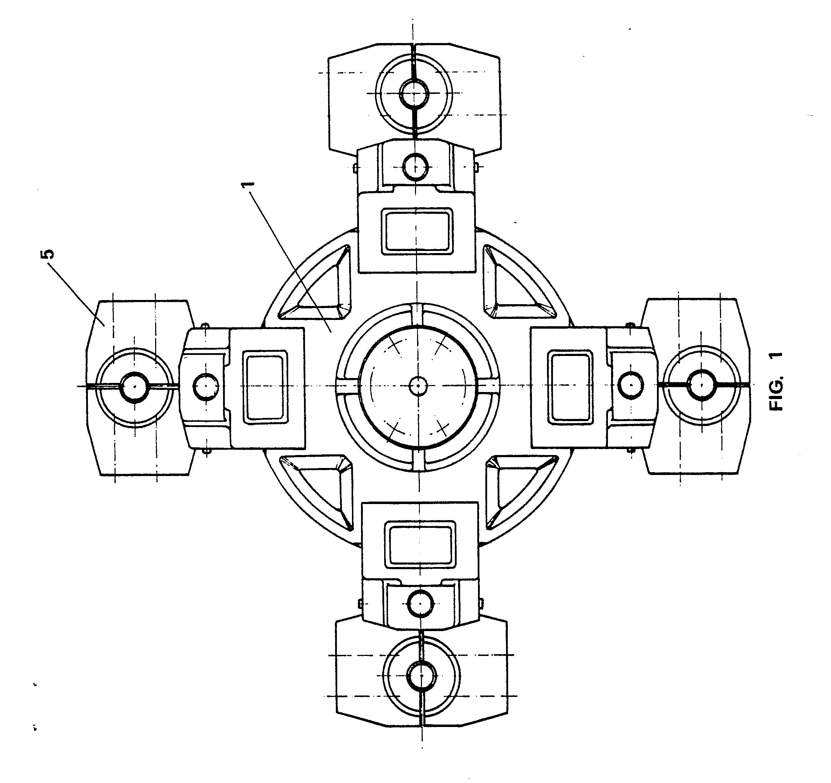

En fig. 1 on peut voir la tête tournante 1 à postes multiples qui doit effectuer une série d'opérations sur des segments de tube qui sont sectionnés au niveau du poste référencé 5.

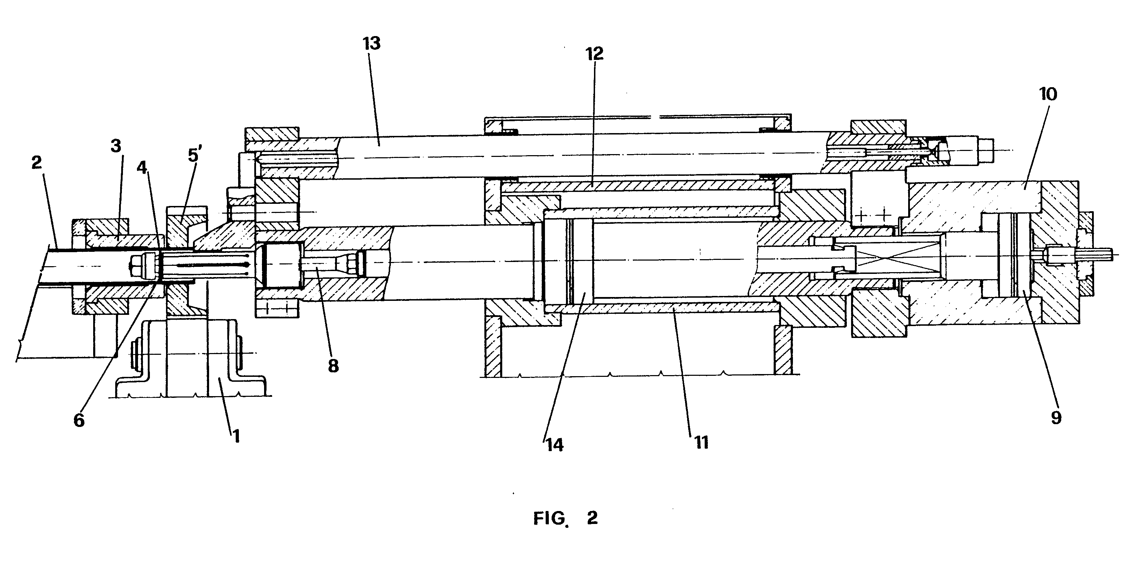

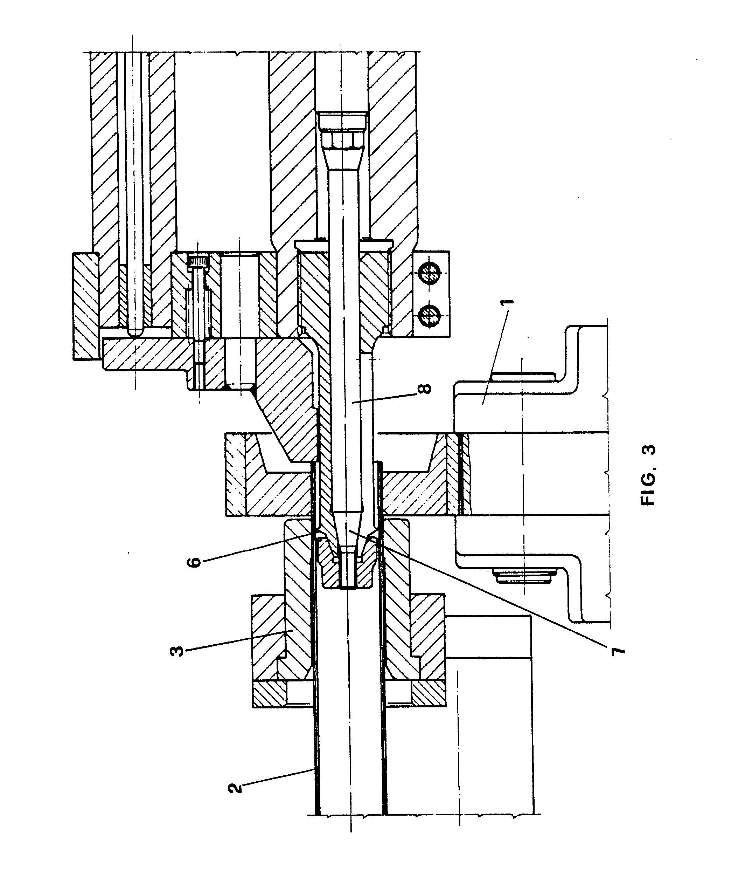

En fig. 2 on a montré en 2 le tube de longueur indéfinie le long duquel on déplace une bague 3 jusqu'à l'amener au niveau de l'outil de coupe 4, du type à secteurs expansibles, disposé à l'intérieur dudit tube dont l'extrémité est maintenue par une pince 5' fixée sur la tête tournante 1. Comme mieux montré en fig. 3, les secteurs expansibles de l'outil 6 sont écartés par l'extrémité tronconique 7 d'une tige 8 qui avance sous la poussée d'un piston 9 (fig. 2) mobile à l'intérieur du corps d'un vérin 10.

Un piston 14 se déplace sous l'effet de l'huile sous pression qui pénètre dans un vérin 11 en même temps qu'une tige 13 solidaire du piston 14 précité, en déplaçant ainsi l'extrémité tronconique 7 pour l'amener à la position de travail.

En même temps la bague 3 avance jusqu'à venir dans la zone de coupe afin de soutenir la poussée exercée dans le sens radial par les secteurs expansibles de l'outil 6. On comprend que l'effet de poussée de la tige 8 munie de l'extrémité tronconique 7 provoque l'expansion des secteurs coupants 6 avec une force de sectionnement très élevée, si bien qu'on obtient de manière sûre le tranchage de tube en fer dont l'épaisseur de métal peut aller jusqu'à 3 mm. et ce de manière très rapide, pratiquement instantanée.

Une fois la coupe effectuée, le piston 9 revient en position de repos en faisant ainsi rentrer les secteurs coupants 6 et en permettant au piston 14 de revenir lui-même en position de repos, pour autoriser la rotation de la tête tournante 1 et le transfert du segment de tube obtenu jusqu'à un nouveau poste de travail.

Le cycle opératoire reprend avec le déplacement de la bague 3, le long du tube 2 sur une longueur égale à celle des segments de tubes à obtenir, le tube 2 à travailler étant ainsi amené à une nouvelle position de travail.

On comprend sans peine les avantages qui sont obtenus par l'adoption du dispositif suivant l'invention, lequel permet de réduire le temps nécessaire à chaque opération de coupe, si bien qu'en liaison avec les autres opérations de la machine opératrice automatique à postes multiples, il sera possible de réduire en définitive le temps de travail de chaque segment et donc d'augmenter la production horaire de la machine avec un avantage sensible sur le plan de la productivité.

Bien entendu les détails particuliers de construction du dispositif ci-dessus décrit peuvent subir des variantes et des modifications par rapport à celles qui ont été exposées avec référence aux planches du dessin annexé, en étant susceptibles d'assumer des formes et des aspects différents, tout en conservant les caractéristiques essentielles de l'invention et sans pour cela sortir du domaine du brevet.

## Revendications

1. Dispositif pour le sectionnement d'un tube métallique par expansion d'un outil à secteurs dans une machine automatique à postes de travail multiples, ladite machine comprenant un premier poste pour réaliser la coupe du tube à travailler tandis que les autres postes assurent d'autres opérations sur les segments obtenus, caractérisé en ce qu'il comprend une série de secteurs coupants expansibles (6) introduits à l'intérieur du tube à sectionner (2), lesquels secteurs sont repoussés vers l'extérieur par l'extrémité tronconique (7) d'une tige (8) soumise à l'action d'un piston (9) en provoquant la coupe d'un segment de tube, cette opération s'effectuant en opposition par rapport à une bague (3) montée co-axialement à l'extérieur du tube et qui se retire ensuite pour permettre la rotation de la tête (1) en même temps que le déplacement du segment de tube obtenu pour la réalisation d'une nouvelle opération de travail.

2. Dispositif suivant la revendication 1, caractérisé en ce que le piston (9), mobile à l'intérieur d'un corps cylindrique sous l'action d'une huile sous pression, assure le déplacement vers l'avant de l'extrémité tronconique (7) de la tige (8) en provoquant l'écartement des secteurs expansibles qui portent les arêtes tranchantes (6) assurant la coupe du segment de tube, en agissant en opposition par rapport à la bague (3) qui renferme le tube au cours de l'opération de coupe.

3. Dispositif de sectionnement suivant les revendications 1 et 2, caractérisé en ce qu'un piston co-axial (14) se déplace à l'intérieur d'un corps cylindrique (11) en étant relié à l'ensemble qui comprend l'outil de coupe (6) à secteurs mobiles qui est donc ensuite retiré du segment de tube obtenu à la fin de chaque opération de coupe pour permettre à la tête tournante (1) de se placer dans une nouvelle position de travail au niveau de laquelle l'outil précité (6) sera ramené par le vérin (10) à une nouvelle position de coupe.

4. Dispositif de sectionnement suivant les revendications 1 à 3, caractérisé en ce que la bague (3) qui assure le guidage du tube (2) au cours de l'opération de coupe en agissant en opposition avec l'outil (6) à secteurs expansibles, est animée d'un mouvement alternatif suivant la direction de l'axe du tube afin de permettre l'éloignement de celui-ci de la zone de coupe à la fin de chaque opération et pour que la tête (1) puisse tourner jusqu'à une nouvelle position de travail avant de ramener le tube (2) au niveau correspondant à une nouvelle opération.

FIG. 1

0 268 327

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 7, no. 159 (M-228)[1304], 3 juillet 1983; & JP-A-58 66 616 (MITSUBISHI JUSHI K.K.) 20-04-1983 * Résumé * --- | 1,2 | B 23 D 21/14 |
| Y | GB-A-2 048 744 (STROOBANTS) * En entier * --- | 1,2 | |
| A | US-A-3 183 702 (ZITTELL) --- | | |
| A | DE-A-2 101 548 (FAIONI) ----- | | |

| DOMAINES TECHNIQUES RECHERCHES (Int. Cl.4) |
|---|
| B 23 D B 26 D |

Le présent rapport a été établi pour toutes les revendications

| Lieu de la recherche | Date d'achèvement de la recherche | Examinateur |
|---|---|---|
| LA HAYE | 11-02-1988 | BERGHMANS H.F. |